# EUROPEAN PATENT APPLICATION

(11) **EP 2 309 789 A1**
(43) Date of publication of application: **13.04.2011**
(21) Application number: 09803050.5
(22) Date of filing: 31.07.2009
(51) Int. Cl.: H04W 16/18

(54) **MOBILE COMMUNICATION METHOD AND OPERATION DEVICE**

(30) Priority: 01.08.2008 JP 2008200262
(71) Applicant: NTT DOCOMO, INC., Chiyoda-ku Tokyo 100-6150 (JP)
(72) Inventor: HOSONO, Hiroyuki c/o NTT DOCOMO INC., Int.Prop.Dept., Chiyoda-ku, Tokyo 100-6150 (JP)
(74) Representative: HOFFMANN EITLE
(86) International application number: PCT/JP2009/063677
(87) International publication number: WO 2010/013812

(57) **Abstract**

A mobile communication method according to the present invention includes step of causing an operation apparatus 500 to acquire information on an installation location of a radio base station 200 and identification information of firmware currently used by the radio base station 200, step of causing the operation apparatus 500 to determine station data to be used by the radio base station 200 on the basis of the information on the installation location when the operation apparatus 500 judges that it is necessary to perform updating, and step of causing the operation apparatus to notify the radio base station 200 of firmware information for updating and the determined station data.

## Description

### TECHNICAL FIELD

The present invention relates to a mobile communication method and an operation apparatus.

### BACKGROUND ART

Generally, a network administrator always performs maintenance and operation of each macro-cell radio base station which offers a public communication service, in order to respond to connection requests occurring at random from a mobile station.

For example, the network administrator updates firmware and station data (configuration data) of each macro-cell radio base station in the following procedures.

(1) The network administrator transmits the latest firmware and station data to each macro-cell radio base station by use of an operation apparatus.

(2) The network administrator performs reboot processing of each macro-cell radio base station remotely in off-peak traffic hours and thereby reflects the latest firmware and station data.

That is to say, after starting operation of the macro-cell radio base stations, the network administrator manually reflects the latest firmware and station data in the macro-cell radio base stations.

### SUMMARY OF THE INVENTION

### PROBLEM TO BE SOLVED BY THE INVENTION

In recent years, studies have been made for operational methods of a so-called femto-cell radio base station (Home eNB) which is a radio base station installed in a small area such as a home.

However, since the femto-cell radio base station is installed in a small area such as a home, the number of the femto-cell radio base stations to be operated is assumed to be far more than the number of the macro-cell radio base stations.

Accordingly, there is a problem that it is difficult for a network administrator to reflect the latest firmware and station data in all the femto-cell radio base stations manually as similar to the case of the macro-cell radio base station.

The present invention has therefore been made in view of the above-described problem and an objective thereof is to provide a mobile communication method and an operation apparatus which are capable of reflecting latest firmware and station data in a femto-cell radio base station safely and automatically.

### MEANS FOR SOLVING THE PROBLEM

The first feature of the present invention is summarized in that a mobile communication method including: step A of causing an operation apparatus to acquire information on an installation location of a radio base station and identification information of firmware currently used by the radio base station; step B of causing the operation apparatus to judge whether or not it is necessary to update the firmware currently used by the radio base station on the basis of the identification information of the firmware; step C of causing the operation apparatus to determine station data to be used by the radio base station on the basis of the information on the installation location when the operation apparatus judges that it is necessary to perform updating; step D of causing the operation apparatus to notify the radio base station of firmware information for updating and the determined station data; and step E of causing the radio base station to update the firmware to be used on the basis of the firmware information and to start operation by using the station data.

The second feature of the present invention is summarized in that an operation apparatus including: a radio base station information reception unit configured to acquire information on an installation location of a radio base station and identification information of firmware currently used by the radio base station; a determination unit configured to judge whether or not it is necessary to update the firmware currently used by the radio base station on the basis of the identification information of the firmware and to determine station data to be used by the radio base station on the basis of the information on the installation location when the determination unit judges that it is necessary to perform updating; and a notification unit configured to notify the radio base station of firmware information for updating and the determined station data.

### EFFECTS OF THE INVENTION

As described above, the present invention can provide a mobile communication method and an operation apparatus which are capable of reflecting latest firmware and station data in a femto-cell radio base station safely and automatically.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of an operation apparatus according to the first embodiment of the present invention.
[Fig. 3] Fig. 3 is a view for explaining a method of resource allocation by the operation apparatus according to the first embodiment of the present invention.
[Fig. 4] Fig. 4 is a view for explaining the method of resource allocation by the operation apparatus according to the first embodiment of the present invention.
[Fig. 5] Fig. 5 is a functional block diagram of a radio base station according to the first embodiment of the present invention.
[Fig. 6] Fig. 6 is a sequence diagram showing operations of the mobile communication system according to the first embodiment of the present invention.

### MODES FOR CARRYING OUT THE INVENTION

### (Configuration of Mobile Communication System According to First Embodiment of the Present Invention)

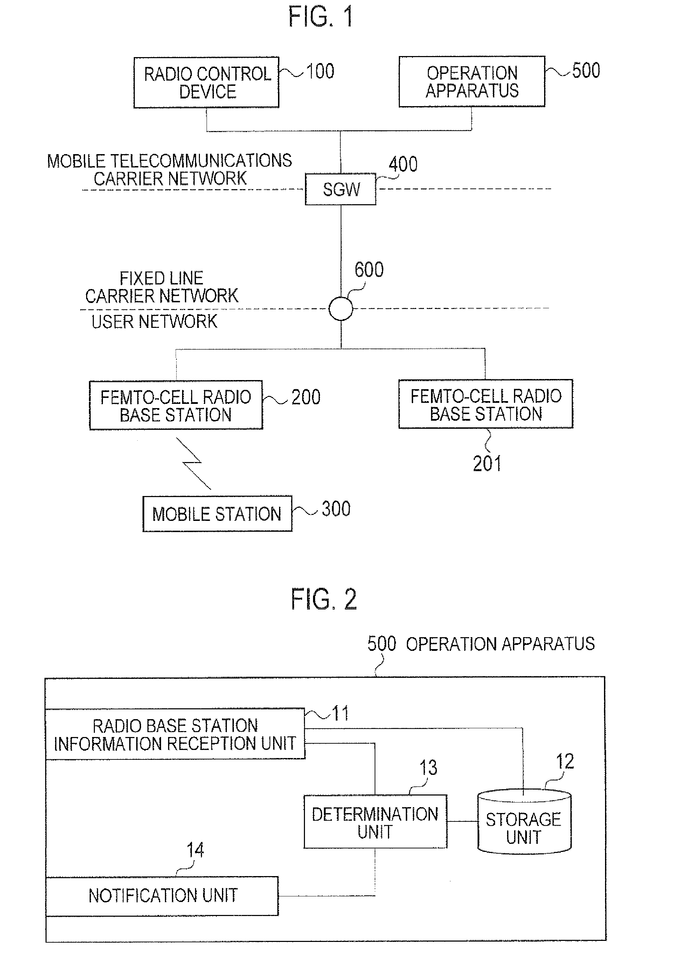

A configuration of a mobile communication system according to a first embodiment of the present invention will be described with reference to Figs. 1 to 5.

As shown in Fig. 1, a mobile communication system according to this embodiment includes a radio control device 100, an operation apparatus 500, a gateway device (SGW: Security Gateway) 400, and femto-cell radio base stations 200 and 201.

The femto-cell radio base stations 200 and 201 are accommodated in the radio control device 100.

The radio control device 100 is configured to allocate an individual radio channel to each of the femto-cell radio base stations 200 and 201 and to manage it, the radio channel used for performing communication between the femto-cell radio base station 200, 201 and a mobile station 300 which performs radio communication with the femto-cell radio base station 200, 201.

The gateway device 400 is installed at an interface with a LAN managed by a mobile telecommunications carrier.

The gateway device 400 is a gateway device for protecting the LAN (mobile telecommunications carrier network) managed by the mobile telecommunications carrier against unauthorized access from other networks, and is configured to allow only the access that is authenticated by the gateway device 400 in authentication processing to the mobile telecommunications carrier network.

Meanwhile, the operation apparatus 500 is installed on the mobile telecommunications carrier network.

As shown in Fig. 2, the operation apparatus 500 includes a radio base station information reception unit 11, a storage unit 12, a determination unit 13, and a notification unit 14.

The radio base station information reception unit 11 is configured to receive radio base station information from each of the femto--cell radio base stations 200 and 201.

The radio base station information is information on each of the femto-cell radio base stations 200 and 201, and includes information such as information on an installation location of each of the femto-cell radio base stations 200 and 201, identification information of firmware currently in use in each of the femto-cell radio base stations 200 and 201, the station data currently in use in each of the femto-cell radio base stations 200 and 201, a model number of each of the femto-cell radio base stations 200 and 201, and station data currently in use in a neighboring radio base station of each of the femto-cell radio base stations 200 and 201, for example.

The information on the installation location of each of the femto-cell radio base stations 200 and 201 may be positional information (latitude and longitude information) acquired by a GPS function provided in each of the femto-cell radio base stations 200 and 201, or may be a cell ID of the neighboring radio base station (macro-cell radio base station or femto-cell radio base station) of each of the femto-cell radio base stations 200 and 201.

The identification information of the firmware is information identifying a type, version information, and the like of the firmware. The station data are operation parameters used in each of the femto-cell radio base stations 200 and 201, which include a spread code, a frequency, and the like, for example.

Here, each of the femto-cell radio base stations 200 and 201 is configured to acquire the station data currently in use in the neighboring radio base station by analyzing broadcast information from the neighboring radio base station.

Moreover, the radio base station information reception unit 11 is configured to acquire the above-described radio base station information through a secured connection (VPN connection: Virtual Private Network) established between the gateway device 400 and each of the femto-cell radio base stations 200 and 201.

The storage unit 12 is configured to store the radio base station information on each of the femto-cell radio base stations 200 and 201.

Meanwhile, the storage unit 12 may also be configured to store a frequency band used in a communication service offered by a macro-cell radio base station.

Here, the radio base station information reception unit 11 may be configured to acquire only a difference from the radio base station information stored in the storage unit 12 as the radio base station information on each of the femto-cell radio base stations 200 and 201.

The determination unit 13 is configured to judge whether or not it is necessary to update the firmware currently in use in each of the femto-cell radio base stations 200 and 201 on the basis of the identification information of the firmware which is acquired by the radio base station information reception unit 11 and stored in the storage unit 12.

For example, the determination unit 13 may acquire the identification information of the firmware currently in use in each of the femto-cell radio base stations 200 and 201 by referring to the storage unit 12 on the basis of identification information of each of the femto-cell radio base stations 200 and 201 acquired by the radio base station information reception unit 11.

Moreover, when the determination unit 13 judges that it is necessary to update the firmware currently in use in each of the femto-cell radio base stations 200 and 201, the determination unit 13 is configured to determine the station data to be used by each of the femto-cell radio base stations 200 and 201 on the basis of the information on the installation location of each of the femto-cell radio base stations 200 and 201.

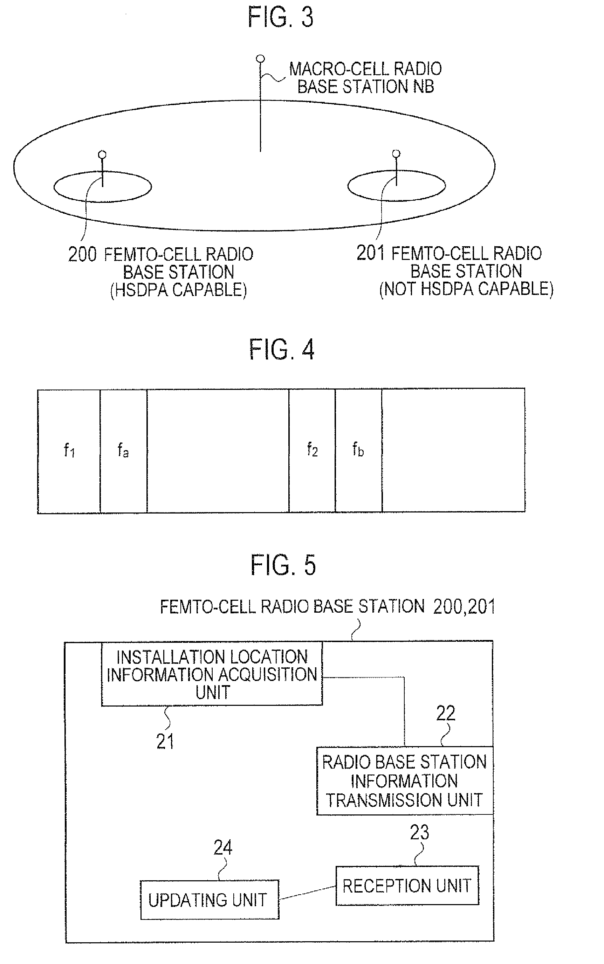

For example, as shown in Fig. 3, the femto-cell radio base station 200 is assumed to be able to provide a HSDPA (High Speed Downlink Packet Access) service while the femto-cell radio base station 201 is assumed to be unable to provide the HSDPA service. In addition, as shown in Fig. 4, a macro-cell radio base station NB is assumed to provide the HSDPA service at a frequency fl and to provide a normal communication service at a frequency 2 in a certain area 1.

In this case, the determination unit 13 may set a frequency fa in the vicinity of the frequency fl as a frequency to be used by the femto-cell radio base station 200 and may set a frequency fb in the vicinity of the frequency f2 as a frequency to be used by the femto-cell radio base station 201 in the certain area 1.

The notification unit 14 is configured to notify each of the femto-cell radio base stations 200 and 201 of firmware information for updating and the station data determined by the determination unit 13.

Here, the notification unit 14 may be configured to notify the firmware information for updating and the station data determined by the determination unit 13 described above through the secured connection (VPN connection) established between the gateway device 400 and each of the femto-cell radio base stations 200 and 201.

The firmware information for updating is a program for updating the firmware currently in use in each of the femto-cell radio base stations 200 and 201 with the latest firmware usable in each of the femto-cell radio base stations 200 and 201.

Although the operation apparatus 500 is described as an independent device in the example of Fig. 1, the operation apparatus 500 may be embedded in any of other devices such as the radio control device 100.

Moreover, the femto-cell radio base stations 200 and 201 are managed not by a network administrator (mobile telecommunications carrier) that is the administrator of the radio control device 100 but by a user subscribed to a service of the mobile telecommunications carrier.

For example, there is also a case in which the femto-cell radio base stations 200 and 201 are installed on the LAN (Local Area Network, user network) managed by the above-mentioned user and are connected to the radio control device 100 installed on the mobile telecommunications carrier network through a network of an access line carrier (fixed line carrier network) such as FTTH (Fiber To The Home) or ADSL (Asymmetric Digital Subscriber Line).

The femto-cell radio base stations 200 and 201 are connected to the operation apparatus 500 through the gateway device 400 and are configured to send the operation apparatus 500 a request for updating the firmware and the station data currently in use.

As shown in Fig. 5, each of the femto-cell radio base station 200 and 201 includes an installation location information acquisition unit 21, a radio base station information transmission unit 22, a reception unit 23, and an updating unit 24.

The installation location information acquisition unit 21 is configured to acquire the information on the installation location of the femto-cell radio base station 200, 201.

For example, the installation location information acquisition unit 21 may define the positional information (the latitude and longitude information) acquired by the GPS function provided in the femto-cell radio base station 200, 201 as the information on the installation location of the femto-cell radio base station 200, 201, or may define the cell ID of the neighboring radio base station (macro-cell radio base station or femto-cell radio base station) of the femto-cell radio base station 200, 201 as the information on the installation location of the femto-cell radio base station 200, 201.

The radio base station information transmission unit 22 is configured to send the operation apparatus 500 the radio base station information on the femto-cell radio base station 200, 201 through the secured connection (VPN connection) established between the gateway device 400 and the femto-cell radio base station 200, 201.

Here, the radio base station information transmission unit 22 may be configured to send the radio base station information on the femto-cell radio base station 200, 201 periodically, to send the radio base station information on the femto-cell radio base station 200, 201 in response to an instruction from the operation apparatus 500, to send the radio base station information on the femto-cell radio base station 200, 201 in response to a predetermined operation by the user (such as pressing a predetermined button), or to send the radio base station information on the femto-cell radio base station 200, 201 at predetermined timing.

The reception unit 23 is configured to receive the firmware for updating and the station data from the operation apparatus 500.

For example, the reception unit 23 may be configured to receive the firmware for updating and the station data from the operation apparatus 500 through the secured connection (VPN connection) established between the gateway device 400 and the femto-cell radio base station 200, 201.

The updating unit 24 is configured to update the firmware currently used by use of the firmware information for updating which is received by the reception unit 23.

Here, each of the femto-cell radio base stations 200 and 201 is configured to be operated by use of the updated firmware after rebooting and to use the station data received by the reception unit 23.

### (Operation of Mobile Communication System according to First Embodiment of the Present Invention)

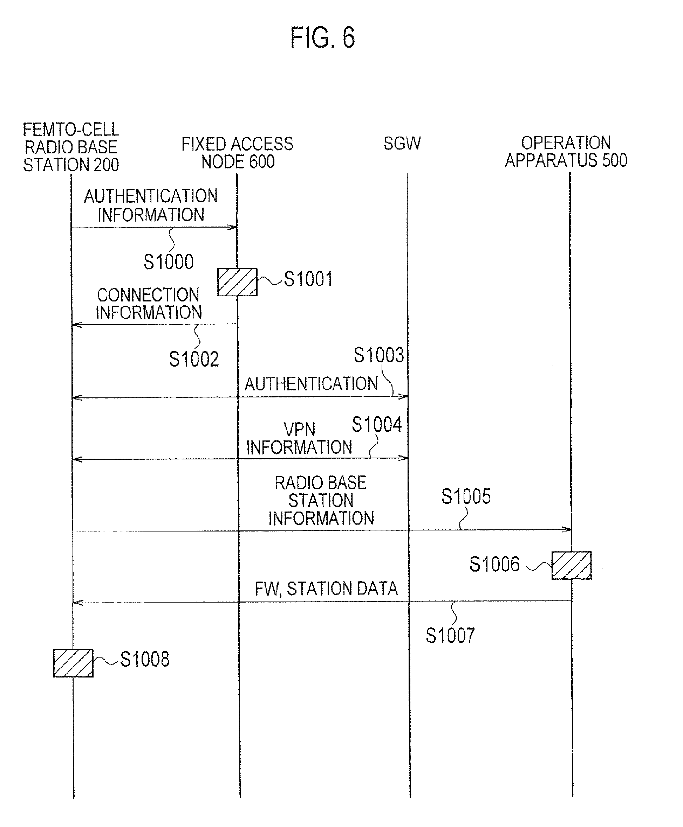

An operation of the mobile communication system according to the first embodiment of the present invention will be described with reference to Fig. 6. Specifically, an operation to update the firmware for the femto-cell radio base station 200 will be described.

As shown in Fig. 6, in step S1000, the femto-cell radio base station 200 transmits authentication information for authenticating the femto-cell radio base station 200 to a fixed access node 600 located at an interface point between the user network and the fixed line carrier network in order to establish connection to the fixed line carrier network.

Here, the fixed access node 600 is, for example, a BAS (Broadband Access Server) being a terminal destination for the "PPPoE" which is the protocol used by the access line carrier for assigning connection information such as an IP address.

Meanwhile, the authentication information is an ID and a password which are required for the authentication in the PPPoE, for example.

In step S1001, the fixed access node 600 performs authentication processing for the femto-cell radio base station 200 by using the received authentication information. When the authentication succeeds, the fixed access node 600 sends the femto-cell radio base station 200 the connection information such as the IP address to be used by the femto-cell radio base station 200 in step S1002.

By completing the operations from steps S1000 to S1002, the femto-cell radio base station 200 is able to establish connection to an external network which retains a global IP address.

In order to establish connection to the gateway device 400 of the mobile telecommunications carrier network, the femto-cell radio base station 200 performs the authentication processing in step S1003 in a way that notifications of authentication information are exchanged between the femto-cell radio base station 200 and the gateway device 400. Then, VPN connection is established between the femto-cell radio base station 200 and the gateway device 400 in step S1004 - Here, when the establishment of the VPN connection is achieved by the IPsec protocol, a preshared key corresponds to the authentication information to be used in the above-described authentication processing.

In step S1005, the femto-cell radio base station 200 notifies the operation apparatus 500 of the above-described radio base station information at predetermined timing.

In step S1006, the operation apparatus 500 judges whether or not the firmware currently used by the femto-cell radio base station 200 is the latest firmware for the model number of the femto-cell radio base station 200 on the basis of the received radio base station information.

When the operation apparatus 500 judges that the firmware currently used by the femto-cell radio base station 200 is the latest firmware for the model number of the femto-cell radio base station 200, the operation apparatus 500 determines optimum station data (such as the spread code or the frequency) on the basis of the installation location of the femto-cell radio base station 200.

Thereafter, in step S1007, the operation apparatus 500 notifies the femto-cell radio base station 200 of the firmware information for updating the firmware to the latest firmware and the optimum station data through the VPN connection.

Note that the operation apparatus 500 does not perform the notification in step S1007 if the femto-cell radio base station has already been in operation using the latest firmware.

In step S1008, the femto-cell radio base station 200 having received the firmware information and the station data reflects the latest firmware and the optimum station data by rebooting in off-peak traffic hours as appropriate.

Here, the operation apparatus 500 may be configured to perform the notification in step S1007 in off-peak traffic hours and the femto-cell radio base station 200 may be configured to reboot immediately.

The above-described features of this embodiment may also be expressed as follows.

A first characteristic of this embodiment is a mobile communication method including: step A of causing the operation apparatus 500 to acquire information on an installation location of the radio base station 200, 201 and identification information of firmware currently used by the radio base station 200, 201; step B of causing the operation apparatus 500 to judge whether or not it is necessary to update the firmware currently used by the radio base station 200, 201 on the basis of the identification information of the firmware; step C of causing the operation apparatus 500 to determine station data to be used by the radio base station 200, 201 on the basis of the information on the installation location when the operation apparatus 500 judges that updating is necessary; step D of causing the operation apparatus 500 to notify the radio base station 200, 201 of firmware information for updating and the determined station data; and step E of causing the radio base station 200, 201 to update the firmware to be used on the basis of the firmware information and to start operation by using the station data.

The first characteristic of this embodiment may further include the steps of: causing the gateway device 400 to perform authentication processing for the radio base station 200, 201; and establishing a secured connection (VPN connection) between the gateway device 400 and the radio base station 200, 201 when the authentication succeeds. In the first characteristic, in step A, the operation apparatus 500 may acquire the information on the installation location and the identification information of the firmware through the connection, and in step D, the operation apparatus 500 may perform the notification of the firmware information for updating and of the station data through the connection.

The gist of a second characteristic of this embodiment is an operation apparatus including: the radio base station information reception unit 11 configured to acquire information on an installation location of a radio base station 200, 201 and identification information of firmware currently used by the radio base station 200, 201; the determination unit 13 configured to judge whether or not it is necessary to update the firmware currently used by the radio base station 200, 201 on the basis of the identification information of the firmware and to determine station data to be used by the radio base station 200, 201 on the basis of the information on the installation location when the determination unit 13 judges that it is necessary to perform updating; and the notification unit 14 configured to notify the radio base station 200, 201 of firmware information for updating and the determined station data.

In the second characteristic of this embodiment, the radio base station information reception unit 11 may acquire the information on the installation location and the identification information of the firmware through a secured connection (VPN connection) established between the gateway device 400 and the radio base station 200, 201 when the authentication processing for the radio base station 200, 201 succeeds, and the notification unit 14 performs notification of the firmware information for updating and the station data through the connection.

### (Advantageous Effects of Mobile Communication System according to First Embodiment of the Present Invention)

According to the mobile communication system of the first embodiment of the present invention, the firmware and the station data for the femto-cell radio base station 200, 201 are automatically updated. Hence it is possible to achieve operation and maintenance of the femto-cell radio base station 200, 201 while suppressing burden on a network administrator even in the case where the number of the installed femto-cell radio base station 200, 201 is increased.

According to the mobile communication system of the first embodiment of the present invention, the mutual authentication processing is performed between the gateway device 400 and the femto-cell radio base station 200, 201. Hence it is possible to avoid damages due to spoofing by an unauthorized radio base station or an unauthorized network administrator.

Moreover, according to the mobile communication system of the first embodiment of the present invention, the VPN connection is established between the gateway device 400 and the femto-cell radio base station 200, 201. Hence it is possible to avoid damages due to falsification or tapping of data which occurs when passing through a path other than that of the mobile telecommunications carrier network.

According to the mobile communication system of the first embodiment of the present invention, it is possible to perform operation by use of the station data which is optimum in accordance with the installation location of the femto-cell radio base station 200, 201 when the firmware is updated.

### (Modified Example)

Although the description of the above embodiment has been given using a W-CDMA mobile communication system as the example, the present invention is not limited only to this mobile communication system and is also applicable to a LTE (Long Term Evolution) mobile communication system, for example.

In this case, the functions of the above-described radio control device 100 will be installed in a radio base station eNB or on an exchange MME.

Note that operation of the above described femto-cell radio base station 200, 201 and the operation apparatus 500 may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the femto-cell radio base station 200, 201 or the operation apparatus 500. Also, the storage medium and the processor may be provided in femto-cell radio base station 201 or the network apparatus 500 as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A mobile communication method comprising:
step A of causing an operation apparatus to acquire information on an installation location of a radio base station and identification information of firmware currently used by the radio base station;
step B of causing the operation apparatus to judge whether or not it is necessary to update the firmware currently used by the radio base station on the basis of the identification information of the firmware;
step C of causing the operation apparatus to determine station data to be used by the radio base station on the basis of the information on the installation location when the operation apparatus judges that it is necessary to perform updating;
step D of causing the operation apparatus to notify the radio base station of firmware information for updating and the determined station data; and
step E of causing the radio base station to update the firmware to be used on the basis of the firmware information and to start operation by using the station data.

2. The mobile communication method according to claim 1, further comprising the steps of:
causing a gateway device to perform authentication processing for the radio base station; and
establishing a secured connection between the gateway device and the radio base station when the authentication processing succeeds, wherein
in the step A, the operation apparatus acquires the information on the installation location and the identification information of the firmware through the connection, and
in the step D, the operation apparatus performs the notification of the firmware information for updating and of the station data through the connection.

3. An operation apparatus comprising:
a radio base station information reception unit configured to acquire information on an installation location of a radio base station and identification information of firmware currently used by the radio base station;
a determination unit configured to judge whether or not it is necessary to update the firmware currently used by the radio base station on the basis of the identification information of the firmware and to determine station data to be used by the radio base station on the basis of the information on the installation location when the determination unit judges that it is necessary to perform updating; and
a notification unit configured to notify the radio base station of firmware information for updating and the determined station data.

4. The operation apparatus according to claim 3, wherein the radio base station information reception unit acquires the information on the installation location and the identification information of the firmware through a secured connection established between a gateway device and the radio base station when the authentication processing for the radio base station succeeds, and
the notification unit performs notification of the firmware information for updating and the station data through the connection.
